(19) Europäisches Patentamt / European Patent Office / Office européen des brevets

(11) **EP 3 630 580 B1**

(12) **FASCICULE DE BREVET EUROPEEN**

(45) Date de publication et mention de la délivrance du brevet:
**31.07.2024 Bulletin 2024/31**

(21) Numéro de dépôt: **18735354.5**

(22) Date de dépôt: **15.05.2018**

(51) Classification Internationale des Brevets (IPC):
**B62D 6/00** $^{(2006.01)}$

(52) Classification Coopérative des Brevets (CPC):
**B62D 6/008**

(86) Numéro de dépôt international:
**PCT/FR2018/051173**

(87) Numéro de publication internationale:
**WO 2018/215711 (29.11.2018 Gazette 2018/48)**

(54) **PROCÉDÉ DE DÉTERMINATION DE L'EFFORT AUX BIELLETTES MODÉLISANT LE RELÂCHEMENT ÉLASTIQUE DU PNEUMATIQUE EN TORSION POUR GÉRER LES TRANSITIONS ENTRE PARKING ET ROULAGE**

VERFAHREN ZUR BESTIMMUNG DER SPURSTANGENKRAFT DURCH MODELLIERUNG DER TORSIONSELASTIZITÄTSFREIGABE DES REIFENS ZUR VERWALTUNG VON ÜBERGÄNGEN ZWISCHEN PARKEN UND FAHREN

METHOD FOR DETERMINING THE TRACK ROD FORCE MODELLING THE TORSIONAL ELASTIC RELEASE OF THE TYRE IN ORDER TO MANAGE TRANSITIONS BETWEEN PARK AND DRIVE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.05.2017 FR 1754566**

(43) Date de publication de la demande:
**08.04.2020 Bulletin 2020/15**

(73) Titulaire: **JTEKT Europe**
**69540 Irigny (FR)**

(72) Inventeurs:
• **BOURDREZ, Sébastien**
  **69510 Yzeron (FR)**
• **DUPRAZ, Pierre**
  **69540 Irigny (FR)**
• **GAUDIN, Serge**
  **69700 Saint Jean de Touslas (FR)**
• **MOULAIRE, Pascal**
  **69890 La Tour de Salvagny (FR)**
• **YAMAMOTO, Kazusa**
  **69002 Lyon (FR)**

(74) Mandataire: **Germain Maureau**
  **12, rue Boileau**
  **69006 Lyon (FR)**

(56) Documents cités:
**WO-A1-2016/005671     JP-A- 2008 189 119**

• **A. ZAREMBA ET AL: "Dynamic analysis and stability of a power assist steering system", PROCEEDINGS OF THE 1995 AMERICAN CONTROL CONFERENCE : THE WESTIN HOTEL, SEATTLE, WASHINGTON, JUNE 21 - JUNE 23, 1995, vol. 6, 31 December 1995 (1995-12-31), US, pages 4253 - 4257, XP055447092, ISBN: 978-0-7803-2445-9, DOI: 10.1109/ACC.1995.532736**

**Description**

La présente invention concerne les systèmes de direction assistée, et plus particulièrement les procédés permettant d'évaluer un effort dit « effort aux biellettes » qui est représentatif des efforts transmis par le train roulant à la crémaillère de direction, *via* les biellettes de direction.

C'est en pratique cet « effort aux biellettes » que le conducteur et l'assistance de direction doivent surmonter pour pouvoir modifier l'orientation en lacet des roues directrices.

Il existe des procédés qui permettent d'estimer l'effort aux biellettes au moyen de grandeurs caractéristiques de la dynamique latérale du véhicule, par exemple à partir de l'accélération latérale ou de la vitesse de lacet du véhicule.

De tels procédés reposent toutefois sur des modèles qui ne sont valables qu'en situation de roulage, et à partir d'une vitesse longitudinale significative du véhicule, typiquement à partir de 50 km/h.

Il est par ailleurs possible d'estimer l'effort aux biellettes en situation de parking, lorsque le véhicule est à l'arrêt.

Toutefois, les modèles utilisés pour estimer l'effort aux biellettes à l'arrêt ne sont plus applicables sitôt que le véhicule se met en mouvement.

Des modèles pour l'estimation de l'effort aux biellettes selon l'état de l'art sont divulgués dans la demande de brevet JP2008189119A et dans l'article "Dynamic analysis and stability of a power assist steering system" par A. Zaremba et Al. , tiré de "Proceedings of the 1995 american control conférence: the Westin Hotel, Seattle, Washington, 21 - 23 June 1995 (vol. 6 du 31/12/1995).

Or, avec la sophistication croissante des systèmes de direction assistée, et en particulier avec l'essor annoncé de systèmes de direction dits « steer-by-wire » qui ne comportent plus de transmission mécanique entre le volant de conduite et le mécanisme de direction qui actionne les roues, il devient nécessaire d'évaluer de façon fiable l'effort aux biellettes en toutes circonstances, et notamment dans un domaine de basse vitesses, typiquement entre 0 km/h et 30km/h, afin de pouvoir restituer au conducteur, à travers le volant de conduite, un ressenti fiable de la route et du comportement du véhicule.

Les objets assignés à l'invention visent par conséquent à remédier aux insuffisances des procédés connus et à proposer un nouveau procédé d'évaluation d'efforts aux biellettes qui permette d'évaluer de façon fiable l'effort aux biellettes aux basses vitesses, et plus particulièrement lors des transitions entre une situation de parking et une situation de roulage (ou inversement).

Les objets assignés à l'invention sont atteints au moyen d'un procédé d'estimation d'effort destiné à estimer la valeur d'un effort d'actionnement, dit « effort aux biellettes », qui s'exerce, dans un système de direction assistée équipant un véhicule, sur un organe de transmission, tel qu'une biellette de direction, appartenant à un mécanisme de direction qui relie un actionneur, tel qu'un volant de conduite ou un moteur d'assistance, à une roue directrice qui est orientable en lacet et qui porte un pneumatique dont la bande de roulement est en contact avec un sol, ledit procédé étant caractérisé en ce que la valeur de l'effort aux biellettes estimé est corrigée en fonction de la vitesse longitudinale du véhicule, de manière à réduire, en valeur absolue, l'effort aux biellettes estimé, en fonction de la vitesse longitudinale du véhicule, lorsque le véhicule passe d'une situation de parking, dans laquelle la vitesse longitudinale du véhicule est nulle, à une situation de roulage, dans laquelle la vitesse longitudinale du véhicule est non nulle.

Avantageusement, l'utilisation de la vitesse longitudinale du véhicule comme paramètre pour atténuer la valeur estimée de l'effort aux biellettes selon l'invention permet de modéliser, et donc de prendre en considération, l'effort de torsion en lacet qu'exerce le pneumatique sur la roue et la biellette, en raison des frottements de la bande de roulement du pneumatique sur le sol qui s'opposent au mouvement d'orientation de la roue, et surtout de modéliser et de prendre en considération le relâchement progressif dudit effort de torsion, qui se produit lors d'une transition d'une situation de parking, à vitesse nulle, à une situation de roulage, à vitesse non nulle.

En effet, les inventeurs ont constaté que, à l'arrêt, un déplacement de la crémaillère, et donc un déplacement de la biellette et de la jante rigide de la roue, connectées à ladite crémaillère, provoque une déformation élastique en torsion du pneumatique, en lacet, en raison de l'existence d'un frottement statique entre le sol et la bande de roulement du pneumatique, qui tend à retenir ladite bande de roulement à l'encontre du déplacement en lacet de la jante.

Du fait de la déformation élastique des flancs du pneumatique, qui relie la jante à la bande de roulement, il apparaît ainsi un décalage angulaire en lacet, c'est-à-dire un écart de position, entre d'une part la jante et d'autre part la bande de roulement du pneumatique qui se trouve au contact du sol.

Plus particulièrement, à l'arrêt, lorsque l'on tourne le volant pour augmenter l'angle de braquage du système de direction, l'angle de braquage (angle de lacet) de la bande de roulement est inférieur à l'angle de braquage (angle de lacet) de la jante, tel que celui-ci est déterminé par la position de la crémaillère.

Or, sitôt que le véhicule commence à rouler, la rotation de la roue a pour effet de provoquer un retour élastique progressif du pneumatique, c'est-à-dire un relâchement élastique de la torsion en lacet, de telle sorte que la bande de roulement du pneumatique tend à s'aligner avec la jante, et à « rattraper » ainsi sensiblement l'angle de lacet de ladite jante.

Avantageusement, l'invention permet de prendre en considération ce phénomène transitoire de relâchement, par une modélisation qui fait intervenir la position de la crémaillère (que l'on considère comme représentative de la position en lacet de la jante, eu égard au caractère relativement rigide des liaisons qui les connectent l'une à l'autre) ainsi que la vitesse longitudinale du véhicule, et qui permet ainsi de simuler de façon très complète les évolutions de la contrainte de torsion élastique exercée par le pneumatique sur le mécanisme de direction, et plus particulièrement sur la biellette et la crémaillère.

Le procédé selon l'invention permet par conséquent de réaliser une estimation particulièrement précise et fiable de l'effort aux biellettes, notamment au cours d'une transition entre situation de parking et situation de roulage (ou inversement), ainsi que lorsque le véhicule circule à basse vitesse, typiquement entre 0 km/h et 20 km/h, voire 30km/h.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, selon une vue schématique, un exemple de système de direction assistée auquel appliquer le procédé selon l'invention.
La figure 2 illustre un modèle physique utilisé pour déterminer un effort aux biellettes conformément au procédé selon l'invention.
La figure 3 illustre, selon un schéma-bloc, la transcription fonctionnelle du modèle de la figure 2.
Les figures 4, 5 et 6 correspondent à des diagrammes comparatifs qui représentent, pour différentes vitesses de véhicule, à savoir 0 km/h, 3 km/h, 7 km/h et 15 km/h, les cycles d'hystérésis de l'effort aux biellettes effectif mesuré et de l'effort aux biellettes estimé par le procédé selon l'invention, en fonction de la position de la crémaillère que l'on fait varier cycliquement selon des manoeuvres alternées de la gauche vers la droite et inversement.

La présente invention concerne un procédé d'estimation d'effort destiné à estimer la valeur d'un effort d'actionnement Fb, dit « effort aux biellettes », qui s'exerce, dans un système de direction assistée 1 équipant un véhicule 2, sur un organe de transmission 3, tel qu'une biellette de direction 3.

Ledit organe de transmission 3 appartient à un mécanisme de direction 4 qui relie un actionneur 5, 6, tel qu'un volant de conduite 5 ou un moteur d'assistance 6, de préférence un moteur d'assistance 6 électrique, à une roue directrice 7 qui est orientable en lacet.

Ladite roue 7 porte un pneumatique 8 dont la bande de roulement 8BR est en contact avec un sol 9.

Le sol 9 peut être de toute nature, et correspond à toute surface ou revêtement sur laquelle le véhicule 2 peut circuler, incluant, non exhaustivement, bitume (route), gravier, terre, sable. Ledit sol 9 peut être sec ou mouillé.

Par commodité de description, on assimilera ici la notion de roue 7 à la partie rigide de la roue 7, formée typiquement par une jante, de préférence métallique.

Selon une première variante de réalisation, le mécanisme de direction 4 comprendra une liaison mécanique 10, telle qu'une colonne de direction 10, permettant la transmission de mouvement (et d'efforts) entre le volant de conduite 5 et les roues directrices 7, par exemple via un pignon 11 monté sur ladite colonne de direction 10 et engrenant sur une crémaillère 12.

Selon une seconde variante de réalisation de l'invention, particulièrement préférée, la liaison entre le volant de conduite 5 et les roues 7 sera réalisée virtuellement au moyen d'une commande électrique 13, de sorte que le système de direction assistée formera un système dit « steer-by-wire ».

Eventuellement, la liaison mécanique 10 entre le volant de conduite 5 et les roues 7 pourra être débrayable, pour pouvoir passer alternativement de la première variante (avec liaison mécanique entre le volant de conduite et les roues) à la seconde variante (steer-by-wire).

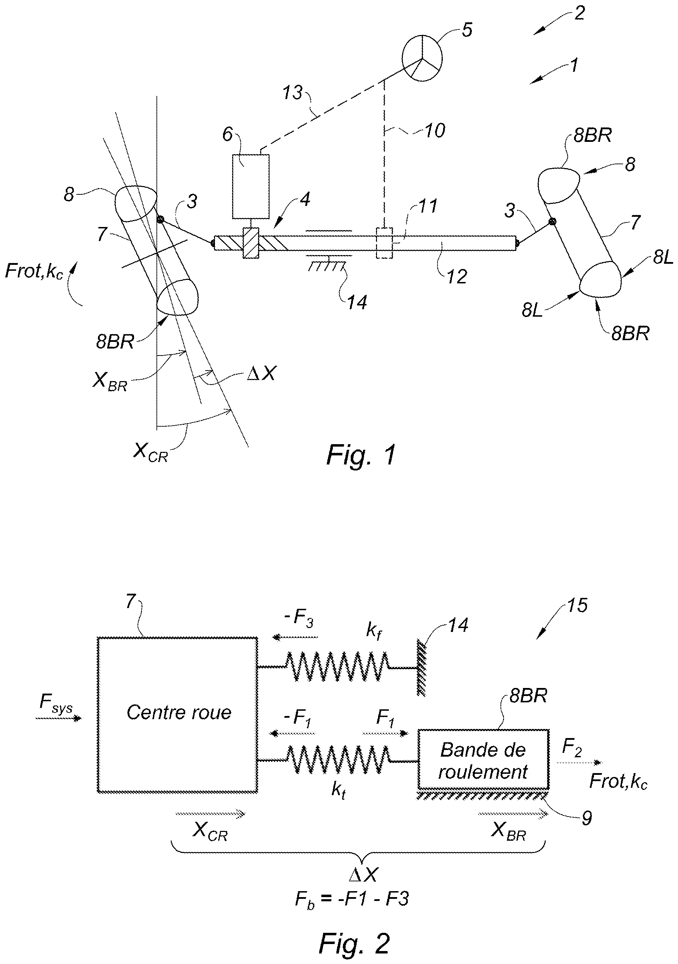

De préférence, quelle que soit la variante envisagée, et tel que cela est illustré sur la figure 1, le mécanisme de direction comprend une crémaillère 12, montée mobile par rapport au châssis 14 du véhicule 2, et plus particulièrement guidée en translation selon son axe longitudinal par rapport au châssis 14 du véhicule.

Comme indiqué plus haut, l'organe de transmission 3 est de préférence formé par une biellette de direction 3.

Ladite biellette de direction 3 relie ici de préférence une extrémité de la crémaillère 12 à la roue directrice 7, et plus particulièrement à un porte-fusée orientable en lacet et qui porte ladite roue directrice 7.

En pratique, l'effort aux biellettes Fb correspondra donc à un effort de traction ou de compression longitudinale de la crémaillère 12, qui est exercé par le train roulant, ici les roues 7, et par l'intermédiaire des biellettes 3, sur les extrémités de la crémaillère 12.

Ainsi, le procédé est en pratique préférentiellement destiné à déterminer un effort d'actionnement dit « effort aux biellettes » Fb représentatif de l'effort qu'exerce un organe de transmission formé par une biellette de direction 3 sur une extrémité d'une crémaillère 12 qui est montée mobile par rapport au châssis 14 du véhicule, et que ladite biellette 3 relie à la roue directrice 7.

Par commodité de description, on pourra donc assimiler l'organe de transmission à une biellette de direction 3 dans ce qui suit.

Du reste, quelle que soit sa forme, l'organe de transmission 3 est bien entendu rigide, et en particulier plus rigide que les flancs 8L du pneumatique 8.

Les flancs 8L du pneumatique désignent ici les portions latérales du pneumatique 8 qui relient la roue 7, et plus particulièrement la jante, à la bande de roulement 8BR.

Plus globalement, le mécanisme de direction 4, et plus particulièrement la chaîne cinématique qui s'étend de la crémaillère 12 à la roue 7, et plus particulièrement qui s'étend de la crémaillère 12 à la jante rigide de ladite roue 7, en passant par la biellette 3, est rigide, et possède un comportement rigide, peu sensible à la déformation élastique, par comparaison aux flancs du pneumatique 8L.

Ainsi, on peut considérer, au moins en première approche, que la position de la jante, et donc la position de la roue 7, peut être assimilée à la position de la biellette 3 et donc de la position de la crémaillère 12, tandis que l'essentiel, voire la totalité, du décalage de position entre la bande de roulement 8BR du pneumatique et la crémaillère 12 sera dû à la torsion élastique du pneumatique 8 par rapport à la roue 7 (la jante).

Selon une autre approche, on pourrait toutefois, en variante, utiliser aux fins de l'invention une modélisation plus complète qui prendrait en considération l'élasticité de la chaîne cinématique qui s'étend de la crémaillère 12 à la roue 7.

Une telle modélisation pourrait par exemple prendre en considération les éventuels décalages de position entre la roue 7 et la crémaillère 12 qui seraient dus à l'élasticité intrinsèque des organes mécaniques correspondant à des pièces mécaniques généralement réputées rigides (tels que les biellettes 3, ou les porte-fusée), ou bien les décalages de position qui seraient dus à l'élasticité des liaisons cinématiques (typiquement des liaisons rotules) entre lesdits organes mécaniques, et notamment à l'élasticité de la liaison entre la crémaillère 12 et la biellette 3.

Par ailleurs, par commodité de description, on exprimera les positions des différents éléments, et notamment les orientations en lacet de la roue 7 et de la bande de roulement du pneumatique 8BR, sous forme de positions linéaires, ramenées dans le même repère que celui de la crémaillère 12

Ainsi, on notera $X_{CR}$ la position dite « position du Centre de la Roue » 7, qui correspond à l'orientation en lacet de la jante rigide de ladite roue 7.

Par commodité de description, et pour les raisons décrites dans ce qui précède, on assimilera de préférence cette position du centre de la roue $X_{CR}$ à la position de l'organe d'actionnement 3 (position de la biellette 3) et à la position de la crémaillère 12, sachant que l'on peut déterminer ladite position du centre de la roue $X_{CR}$ à partir de la position de la biellette 3 et/ou de la position de la crémaillère 12, en tenant compte de la géométrie, et le cas échéant de l'élasticité, des liaisons cinématiques entre ces organes.

De même, on notera $X_{BR}$ la position qui correspond à l'orientation en lacet de la bande de roulement 8BR du pneumatique 8 en contact avec le sol 9.

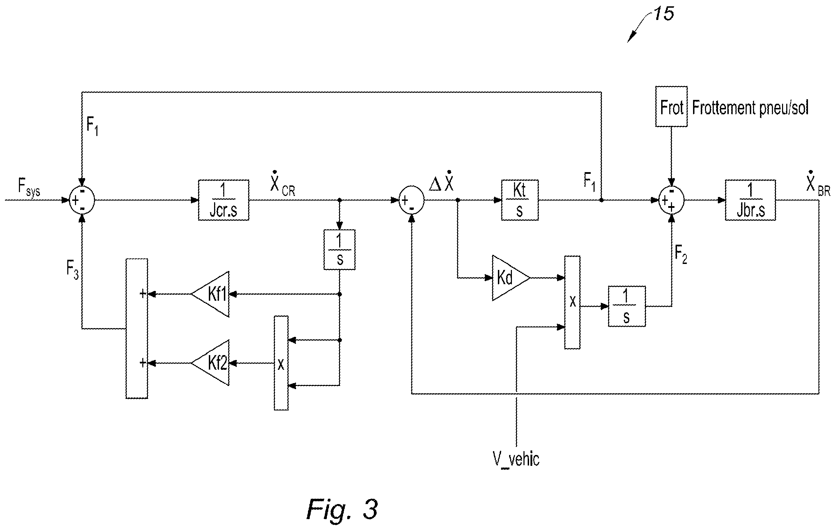

En tout état de cause, conformément au procédé selon l'invention, la valeur de l'effort aux biellettes Fb estimé est corrigée en fonction de la vitesse longitudinale V_vehic du véhicule 2, tel que cela est notamment visible sur la figure 3, de manière à réduire, en valeur absolue, l'effort aux biellettes Fb estimé, en fonction de la vitesse longitudinale V_vehic du véhicule, lorsque le véhicule passe d'une situation de parking, dans laquelle la vitesse longitudinale du véhicule V_vehic est nulle (V_vehic = 0), à une situation de roulage, dans laquelle la vitesse longitudinale du véhicule est non nulle (|V_vehic| > 0).

Comme indiqué plus haut, la prise en considération de l'influence de la vitesse du véhicule V_vehic sur la torsion élastique résiduelle entre la bande de roulement 8BR du pneumatique et la roue 7 permet d'étendre la plage de validité du modèle proposé par l'invention aussi bien aux situations de parking qu'aux situations de roulage à basse vitesse, notamment entre 0 km/h et 20 km/h, voire jusqu'à 30 km/h, et de gérer les transitions entre situations de parking et de roulage.

Le fait de prévoir une correction ayant pour effet de réduire l'effort aux biellettes Fb estimé lors de la mise en mouvement du véhicule permet avantageusement d'inclure, dans l'estimation de l'effort aux biellettes Fb selon l'invention, l'effet de relâchement progressif de la torsion en lacet du pneumatique 8, et donc l'effet d'alignement progressif de la bande de roulement 8BR sur la position en lacet de la roue 7 qui est induit par la mise en rotation de ladite roue 7 et du pneumatique 8 (autour de l'axe horizontal de la roue).

Comme cela sera décrit plus en détail ci-dessous, l'invention permet d'évaluer l'effort aux biellettes Fb à partir d'un modèle 15 qui prévoit une torsion élastique en lacet du pneumatique 8, sous les actions conjuguées de l'actionneur (et plus particulièrement sous l'action de la biellette 3 entraînée par la crémaillère 12 mue par le volant de conduite 5 et/ou le moteur d'assistance 6) d'une part et du frottement du sol 9 d'autre part, et qui inclut une composante de correction qui simule un relâchement de l'effort élastique de torsion en lacet du pneumatique 8 lors du passage de la situation de parking à la situation de roulage.

A ce titre, selon une caractéristique préférentielle qui peut constituer une invention en tant que telle, on pourra déterminer l'effort aux biellettes Fb à partir d'une part de la vitesse longitudinale du véhicule V_vehic et d'autre part de la position $X_{CR}$ de la crémaillère 12 considérée comme position représentative de l'organe de transmission 3 (biellette 3), ou, plus globalement, à partir de toute information équivalente de position qui soit représentative de l'orientation en lacet de la jante de la roue 7, c'est-à-dire représentative de la position $X_{CR}$ du centre de la roue 7 ou qui permette de déterminer ladite position $X_{CR}$ du centre de la roue 7.

Selon l'invention et tel que cela est illustré sur la figure 2, on évalue l'effort aux biellettes Fb à partir d'un modèle 15 qui utilise :

- une première composante d'effort $F_1$ qui est représentative d'une torsion élastique en lacet du pneumatique 8 correspondant à un écart de position $\Delta X = X_{CR} - X_{BR}$ entre d'une part la position $X_{CR}$ conférée à l'organe de transmission 3 (et plus précisément à la roue 7) par le système de direction assistée 1, c'est-à-dire en pratique la position $X_{CR}$ conférée à l'organe de transmission 3 par le système de direction assistée, et d'autre part la position $X_{BR}$ de la bande de roulement 8BR du pneumatique qui est retenue, à l'encontre des déplacements dudit organe de transmission, par un effort résistant de frottement, ici symbolisé par les mentions « Frot, $k_c$ » sur la figure 2, que le sol 9 exerce sur ladite bande de roulement du pneumatique 8BR ;

- et une seconde composante d'effort $F_2$ qui atténue la première composante d'effort $F_1$, en fonction de la vitesse longitudinale du véhicule V_vehic, dès lors que le véhicule 2 adopte une vitesse longitudinale non nulle, de manière à prendre en considération le relâchement progressif de la torsion élastique en lacet du pneumatique 8 lors d'une transition entre une situation de parking, où la vitesse longitudinale du véhicule est nulle, et une situation de roulage, où la vitesse longitudinale du véhicule est non nulle.

L'écart de position $\Delta X = X_{CR} - X_{BR}$ correspond ici à la différence d'orientation en lacet, due à la déformation élastique du flan 8L du pneumatique 8 sous contrainte de torsion en lacet, entre l'orientation en lacet $X_{CR}$ de la roue 7 (jante), telle que définie par l'action de la crémaillère 12 et de la biellette 3, et l'orientation en lacet $X_{BR}$ de la bande de roulement 8BR du pneumatique 8 retenue par le frottement Frot, $k_c$ sur le sol 9.

Cet écart de position $\Delta X$ tend à réduire (c'est-à-dire à s'approcher de zéro) lorsque le véhicule se met en mouvement, et que la rotation de la roue 7 et du pneumatique 8 (c'est-à-dire le mouvement de roulement du pneumatique 8 sur le sol 9) tend à aligner la bande de roulement 8BR en lacet sur la roue 7, c'est-à-dire tend à faire converger la position $X_{BR}$ de la bande de roulement 8BR vers la position $X_{CR}$ de la roue 7, au fur et à mesure de la rotation (du roulement sur le sol 9) de la roue 7.

On notera également que le modèle 15 permettant d'évaluer l'effort aux biellettes Fb utilise de préférence, en plus de la première composante d'effort $F_1$ et de la seconde composante d'effort $F_2$, une troisième composante d'effort $F_3$, qui dépend de la position $X_{CR}$ de l'organe de transmission 3 (et plus précisément de l'orientation en lacet $X_{CR}$ de la roue 7), par rapport au châssis 14, afin de modéliser les effets du soulèvement du véhicule 2 (en l'occurrence du soulèvement de l'avant du véhicule lorsque la roue 7 directrice manoeuvrée appartient au train avant) lors du braquage en lacet de la roue 7.

Cette troisième composante d'effort $F_3$, dont le calcul sera détaillé plus bas, est distincte et indépendante de la première et de la seconde composante d'effort $F_1$, $F_2$, et permet avantageusement de compléter le modèle 15 en prenant en considération les contraintes induites par le roulis et le tangage du véhicule 2 qui résultent de la modification de l'angle de braquage (modification de l'orientation en lacet) de la roue 7.

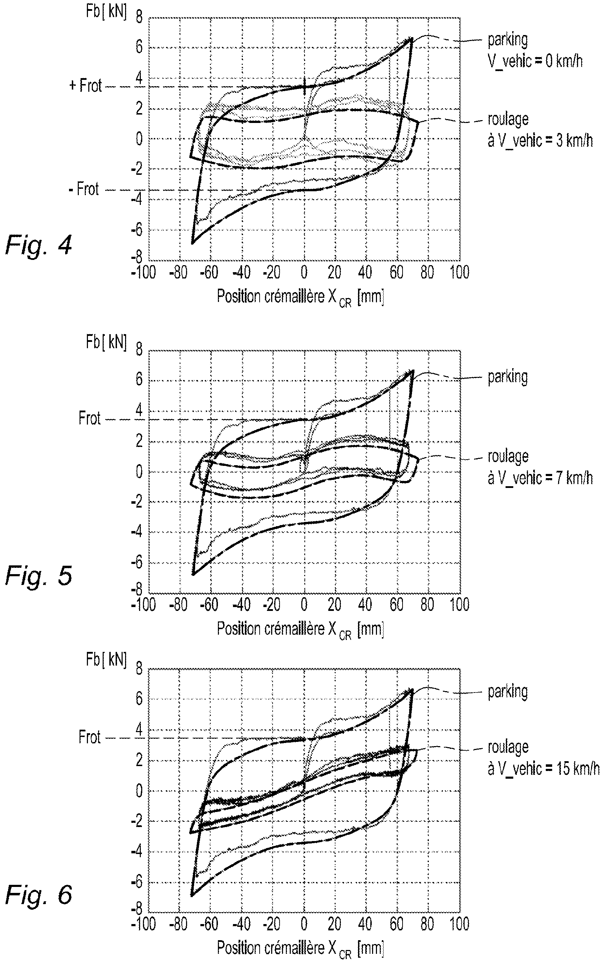

Graphiquement, tel que cela est visible sur les figures 4, 5 et 6, cette troisième composante d'effort $F_3$ permet en pratique de conférer leur forme ondulée (forme en S) aux courbes d'hystérésis qui représentent l'effort aux biellettes Fb en fonction des déplacements de la crémaillère 12, c'est-à-dire en fonction de la position $X_{CR}$ en lacet de la roue 7.

De préférence, la première composante d'effort $F_1$ est modélisée au moyen d'un premier coefficient de raideur $k_t$, représentatif de la raideur en torsion du pneumatique 8, que l'on multiplie par l'écart de position $\Delta x$ entre l'organe de transmission 3 (et plus particulièrement la jante de la roue 7) et la bande de roulement du pneumatique 8BR :

$$F_1 = k_t * \Delta x$$

On réalise ainsi une modélisation particulièrement simple, et bien représentative de la déformation élastique des flancs 8L du pneumatique qui relient la jante, c'est-à-dire la partie rigide de la roue 7, et donc la crémaillère 12, au sol 9.

La seconde composante d'effort $F_2$ est quant à elle de préférence modélisée, selon une caractéristique qui peut constituer une invention en tant que telle, au moyen d'un second coefficient $k_d$ que l'on multiplie d'une part par la vitesse longitudinale du véhicule V_vehic et d'autre part par l'écart de position $\Delta x$ entre l'organe de transmission 3 (et plus précisément la jante de la roue 7) et la bande de roulement du pneumatique 8BR :

$$F_2 = k_d * V\_vehic * \Delta x$$

Ici encore, on pourra donc utiliser une modélisation relativement simple pour rendre compte de l'effet de la mise en mouvement du véhicule, et donc du passage d'une vitesse V_vehic nulle à une vitesse non nulle, sur l'effort aux biellettes.

On notera que, en pratique, le second coefficient $k_d$ est exprimé en N*s/m², et donc en Pa.s, et est donc homogène à une viscosité dynamique.

De préférence, la seconde composante d'effort $F_2$ est calculée à partir de la vitesse longitudinale du véhicule V_vehic et à partir d'une valeur de frottement statique, notée « Frot », qui est représentative de l'effort de frottement entre la bande de roulement 8BR et le sol 9, en limite de glissement, qui doit être surmonté par l'action de l'organe de transmission 3 pour provoquer, lorsque le véhicule 2 est à l'arrêt, un déplacement en lacet de la bande de roulement 8BR du pneumatique sur le sol 9.

Ladite valeur de frottement statique Frot pourra être déterminée empiriquement, par des essais, en manoeuvrant le système de direction assistée 1 lorsque le véhicule se trouve à l'arrêt (i.e. à vitesse V_vehic nulle) sur le sol 9, de préférence sur le sol sec.

Graphiquement, la valeur de frottement statique Frot correspond à l'ordonnée à l'origine des cycles d'hystérésis réalisés lorsque le véhicule 2 est à l'arrêt, c'est-à-dire à l'effort seuil qu'il faut exercer sur la roue 7, à partir de la position centrale neutre du mécanisme de direction 4 (roues 7 en ligne droite, donc $X_{CR} = 0$) pour provoquer le début du glissement en lacet de la bande de roulement 8BR sur le sol 9 dans la direction de manoeuvre désirée.

Plus précisément, ladite valeur de frottement statique Frot correspond à la valeur de frottement qui, lorsque le véhicule est à l'arrêt (V_Vehic = 0), est due au frottement de glissement en lacet de la bande de roulement 8BR du pneumatique 8 sur le sol 9, et qui oppose donc une résistance au mouvement établi du mécanisme de direction 4, et plus particulièrement au mouvement établi de la crémaillère 12, au cours d'une manoeuvre de gauche à droite (ou inversement), et au moment où le mécanisme de direction 4, et plus particulièrement la crémaillère 12, passe par la position centrale ($X_{CR} = 0$) à une vitesse (de crémaillère) établie, non nulle ($\dot{X}_{CR} \neq 0$).

A titre indicatif, la valeur de frottement statique Frot utilisée sur le véhicule 2 à l'origine des courbes des figures 4 à 6 est de 3 400 N.

Par ailleurs, selon une caractéristique qui peut constituer une invention à part entière, la valeur de frottement statique Frot pourra être ajustée selon des paramètres propres au véhicule et/ou à l'environnement dudit véhicule, par exemple en fonction de critères liés aux conditions météorologiques (pluie, gel), et qui sont susceptibles de modifier l'adhérence du pneumatique 8 sur le sol 9.

On pourra par exemple prévoir à cet effet un modèle ou une table de valeurs permettant d'ajuster, le cas échéant de manière dynamique au fil du temps, la valeur de frottement statique Frot selon des paramètres propres à la situation du véhicule et qui influent sur les conditions d'adhérence (nombre d'occupants du véhicule et/ou plus généralement charge du véhicule, niveau de gonflage des pneumatiques, paramètres dynamiques du véhicule tels que l'accélération latérale ou la vitesse de lacet au regard de la situation de braquage et de la vitesse du véhicule, etc.) et/ou selon des paramètres externes, propres à l'environnement du véhicule, tels que les conditions météorologiques (température, hygrométrie, présence de pluie...) qui influent également sur les conditions d'adhérence.

En pratique, la valeur de frottement instantanée qui s'exerce effectivement sur la bande de roulement du pneumatique 8BR pourra varier, et prendre toute valeur comprise entre +Frot et -Frot.

Le cas échéant, on pourra donc compléter le modèle 15 d'évaluation de l'effort biellette Fb, afin d'en améliorer la précision, en lui ajoutant un modèle auxiliaire de frottement tel que le modèle LuGre, notamment pour rendre compte de l'évolution du frottement instantané qui s'exerce sur la bande de roulement 8BR lors de phases de transition.

Ces phases de transition correspondent au phénomène observé lorsque la bande de roulement 8BR commence à glisser sur le sol 9, et que l'on passe ainsi d'une absence de mouvement de braquage à un mouvement effectif de braquage, de type régime établi, ce qui provoque effectivement un déplacement en lacet de la bande de roulement 8BR à la suite de la roue 7.

En pratique, lesdites phases de transition peuvent correspondre au début d'une manoeuvre de braquage, c'est-à-dire lorsque le conducteur commence à tourner le volant de conduite 5 pour quitter la position d'origine centrale, au début de chaque cycle d'hystérésis sur les figures 4 à 6, ou bien aux inversions du sens de braquage du volant de conduite 5, lorsque le conducteur inverse le sens de rotation du volant de conduite 5, par exemple pour ramener le volant 5 vers la gauche après l'avoir tourné vers la droite (ou inversement), comme cela est le cas aux extrémités de la course de la crémaillère 12 sur les cycles d'hystérésis représentés sur les figures 4, 5 et 6.

En pratique, c'est un tel modèle auxiliaire de frottement qui confère une forme arrondie au tracé du cycle de braquage, lors desdites phases de transition, c'est-à-dire lorsque la bande de roulement 8BR commence à glisser sur le sol 9, et donc notamment au début du cycle d'hystérésis ainsi qu'aux inversions de braquage aux extrémités de la course de la crémaillère 12.

La possibilité de recourir à un modèle auxiliaire de frottement est indiquée sur le modèle 15 de la figure 2 par la mention d'un coefficient dit « raideur de collage » $k_c$, utilisable notamment dans un modèle de type LuGre.

Les différents éléments susmentionnés et présentés sur le modèle 15 de la figure 2 se retrouvent, mathématiquement, dans le schéma-bloc de la figure 3.

Ledit schéma-bloc représente le modèle 15 retranscrit sous forme de fonctions de transfert de Laplace, où « s » est la variable de Laplace.

Le schéma-bloc rend notamment compte du principe fondamental de la dynamique appliqué à la roue 7, et plus particulièrement à la jante (centre roue).

On notera à ce titre que, si ledit principe fondamental de la dynamique s'écrit sous la forme générale :

$$\sum F = m \cdot \ddot{x}$$

on tient ici compte du fait qu'un ordinateur ne sait pas à proprement parler « dériver » une expression, mais sachant sait par contre très bien « intégrer », ce qui conduit à privilégier la forme suivante :

$$\dot{x} = \frac{1}{m} \cdot \int \sum F \, dt$$

qui, une fois traduite en fonction de transfert de Laplace donne :

$$\dot{x} = \frac{1}{m} \cdot \frac{\sum F}{s}$$

Par convention et par commodité, on considérera des constantes d'intégration nulles, c'est-à-dire un modèle 15 pour lequel toutes les variables d'état sont nulles à l'origine.

Cependant, il serait tout à fait envisageable, sans sortir du cadre de l'invention, d'utiliser des constantes d'intégration non nulles, afin de faire débuter la simulation en un quelconque point de fonctionnement.

Dans la mesure où l'on applique ici le principe fondamental de la dynamique à une rotation de lacet de la roue 7 et de la bande de roulement 8BR, on utilise ici, en lieu et place de la masse « m », des grandeurs représentatives des moments d'inertie Jcr, Jbr respectifs de la roue 7 (centre roue) et de la bande de roulement 8BR du pneumatique 8.

De même, le schéma-bloc rend compte des composantes d'effort exprimées sous forme de raideur, de type

$$F = k \cdot \Delta x$$

qui se traduisent, toujours pour la même raison de facilité d'intégration, par:

$$F = k \cdot \int \Delta \dot{x} \, dt$$

et donc par :

$$F = \frac{k}{s} \Delta \dot{x}$$

Par ailleurs, le modèle de la figure 2, et sa transcription en schéma-bloc de la figure 3, font apparaître une valeur d'effort Fsys, qui symbolise, par souci d'exhaustivité, l'effort transmis à la roue 7 par le mécanisme de direction 4, lequel correspond typiquement à l'action du moteur d'assistance 6, éventuellement conjuguée à l'action manuelle du conducteur.

Cependant, l'effort Fsys n'intervient pas en lui-même dans la résolution du problème, c'est-à-dire dans la détermination de l'effort aux biellettes Fb par le modèle 15.

En tout état de cause, la sortie du modèle 15, c'est-à-dire l'effort aux biellettes Fb que l'on cherche à estimer, vaut :

$$Fb = -F_1 - F_3$$

On notera que, dans l'expression ci-dessus, les signes « moins » sont utilisés par simple convention afin d'indiquer que l'effort aux biellettes Fb est un effort de réaction de la biellette 3 et de la crémaillère 12 aux conditions de contraintes créées par le déplacement en lacet de la roue 7 (c'est-à-dire créées par la manoeuvre de braquage).

On notera également que, dans le schéma-bloc proposé sur la figure 3, le bloc « Frot » renvoie en sortie une estimation de la valeur de frottement instantanée entre la bande de roulement 8BR du pneumatique 8 et le sol 9, valeur de frottement instantanée qui s'oppose, à l'instant considéré, à la rotation en lacet de la roue 7 et de ladite bande de roulement 8BR par rapport au sol 9.

En toute rigueur, et comme il a été dit plus haut, ladite valeur de frottement instantanée estimée qui est renvoyée par ledit bloc « Frot » pourra prendre toute valeur comprise entre -Frot (valeur du frottement statique, ou « frottement de glissement », dans un premier sens de braquage) et +Frot (valeur du frottement statique, ou « frottement de glissement », dans un second sens de braquage opposé au premier), en fonction de la vitesse $\dot{X}_{CR}$ de déplacement en lacet de la roue 7 (et plus globalement en fonction de la vitesse $\dot{X}_{CR}$ de déplacement du mécanisme de direction 4), par exemple sur la base d'un modèle de frottement de type LuGre.

Cependant, en première approximation, on pourra considérer que, en pratique, la valeur de frottement instantanée correspond à la valeur +/-Frot du frottement statique, considérée en régime établi, c'est-à-dire considérée lorsque le mécanisme de direction 4, et plus particulièrement la roue 7, est animé d'un mouvement sensiblement constant, de vitesse non nulle ( $\dot{X}_{CR} \neq 0$ ), au moment où l'on franchit la position centrale ($X_{CR} = 0$).

Une telle situation représente en effet bel et bien, en pratique, une évaluation du frottement au cours d'un cycle d'hystérésis (figures 4 à 6) qui correspond à une succession de régimes établis (un premier régime établi permettant de réaliser une manoeuvre de braquage de gauche à droite, puis un autre régime, rapidement établi, permettant de réaliser la manoeuvre inverse, de droite à gauche, etc.)

En tout état de cause, en simplifiant les expressions mathématiques résultant du schéma-bloc de la figure 3, on obtient :

$$F_b \;=\; -\frac{Frot}{1+\dfrac{k_d \cdot V\_vehic}{k_t}} - F_3$$

si la vitesse de déplacement (en lacet) de la roue 7, et donc la vitesse de translation de la crémaillère 12 et plus globalement la vitesse de déplacement du mécanisme de direction 4, est positive, c'est-à-dire si $\dot{X}_{CR} > 0$,
ou, de manière similaire :

$$F_b \;=\; \frac{Frot}{1+\dfrac{k_d \cdot V\_vehic}{k_t}} - F_3$$

si la vitesse de déplacement (en lacet) de la roue 7 (et plus globalement la vitesse de déplacement du mécanisme de direction 4) est négative, c'est-à-dire si $\dot{X}_{CR} < 0$.

Ainsi, de préférence, et quel que soit par ailleurs le signe de la vitesse de déplacement en lacet de la roue 7, l'effort aux biellettes Fb est calculé à partir (au moins) d'un terme du premier ordre par rapport à la vitesse du véhicule V_vehic, ledit terme valant (en valeur absolue) :

$$\frac{Frot}{1 + \dfrac{k_d \cdot V\_vehic}{k_t}}$$

C'est avantageusement ce terme qui introduit la variabilité, et plus particulièrement la décroissance, de l'effort aux biellettes Fb selon la vitesse du véhicule V_vehic, afin de rendre compte du relâchement élastique du pneumatique 8, tout en conservant, par l'intermédiaire du quotient du second coefficient $k_d$, attaché à la seconde composante d'effort $F_2$, et par l'intermédiaire du premier coefficient $k_t$, attaché à la première composante d'effort $F_1$, l'influence des deux composantes d'effort $F_1$, $F_2$ qui modélisent la situation de torsion du pneumatique 8.

On notera que, lorsque la crémaillère 12 se trouve dans sa position centrale, c'est-à-dire quand $X_{CR}$ = 0, la troisième composante d'effort $F_3$ est nulle (du fait que, en l'absence de braquage, le véhicule ne se soulève pas), si bien que l'on a :

$$F_b(X_{CR} = 0) = \frac{Frot}{1 + \dfrac{k_d \cdot V\_vehic}{k_t}}$$

Le terme du premier ordre ci-dessus permet donc de définir, pour toute vitesse de véhicule V_véhic, l'ordonnée à l'origine de la courbe d'hystérésis (telle que représentée sur les figures 4 à 6).

On notera que cette ordonnée à l'origine décroît, en valeur absolue, avec la vitesse du véhicule, ce qui explique le « tassement » observé entre les courbes d'hystérésis au fur et à mesure que la vitesse longitudinale du véhicule V_vehic croît.

A vitesse du véhicule nulle, c'est-à-dire lorsque le véhicule est à l'arrêt, on retrouve bien

$$Fb(V\_véhic = 0) = Frot.$$

On notera également que, comme cela a été indiqué plus haut, le terme du premier ordre ci-dessus correspond en pratique à un régime de manoeuvre établi, c'est-à-dire à une situation dans laquelle la crémaillère 12, et donc la roue 7, est animée d'une vitesse établie, non nulle : $\dot{X}_{CR} \neq 0$, lorsqu'elle franchit la position considérée, ici la position centrale $X_{CR}$ = 0 (en venant de la gauche pour aller vers la droite ou inversement).

Par ailleurs, le second coefficient $k_d$ est de préférence ajusté en fonction de la valeur de frottement statique Frot.

A cet effet, le modèle 15 peut comprendre une cartographie qui exprime ledit second coefficient $k_d$ en dépendance du frottement statique Frot.

Par ailleurs, selon une mise en oeuvre possible de l'invention, on peut conserver un second coefficient $k_d$ identique quelle que soit la vitesse du véhicule V_vehic.

D'après les constats expérimentaux des inventeurs, cette approximation reste en effet généralement valable.

C'est en particulier le cas sur les courbes des figures 4 à 6.

De préférence, selon une autre possibilité de mise en oeuvre, et de manière alternative ou complémentaire à l'ajustement susmentionné selon la valeur de frottement statique Frot, le second coefficient $k_d$ peut être ajusté en fonction de la vitesse longitudinale du véhicule V_vehic.

Avantageusement, cette possibilité de faire varier si nécessaire le second coefficient $k_d$ en fonction de la vitesse du véhicule V_vehic permet notamment d'étendre de façon fiable le domaine de validité du modèle 15 de calcul de l'effort aux biellettes Fb sur toute une plage de vitesses basses et moyennes, typiquement jusqu'à V_vehic = 30 km/h au moins, et de parfaire ainsi la corrélation entre ledit modèle 15 et le comportement réel du véhicule.

Cette possibilité d'ajustement du second coefficient $k_d$ permettra ainsi, le cas échéant, de garantir un recouvrement fiable entre ledit modèle 15 « basses vitesses » et un autre modèle de calcul de l'effort aux biellettes Fb validé pour les hautes vitesses de véhicule V_vehic (supérieures à 30 km/h voire à 50 km/h).

A titre d'exemple, les inventeurs ont en effet constaté que l'on pouvait, en première approximation, utiliser valablement un second coefficient $k_d$ constant entre 0 km/h et 15 km/h, mais qu'il pouvait être souhaitable de le modifier au-delà, pour des vitesses véhicule V_vehic supérieures, et notamment entre 15 km/h et 30km/h.

Ici encore, on pourra prévoir une cartographie adaptée, ou toute loi d'évolution appropriée.

La troisième composante d'effort $F_3$ est quant à elle de préférence calculée, tel que cela est visible sur la figure 3, à partir d'un polynôme du second degré comprenant un terme linéaire et un terme quadratique par rapport à la position $X_{CR}$ de l'organe de transmission 3 (position de la jante de la roue 7) :

$$F_3 = kf1{*}X_{CR} + kf2{*}X_{CR}{}^2.$$

En toute rigueur, compte-tenu de la convention de signes utilisée dans ce qui précède, on aura :

$$F_3 = \left(k_{f1} \cdot X_{cr} + k_{f2} \cdot X_{cr}^2\right) \cdot \mathrm{sgn}\left(X_{cr}\right)$$

, où « sgn($X_{CR}$) » est le signe de la valeur de position $X_{CR}$ de la roue 7, respectivement de la crémaillère 12, par rapport à la position centrale.

Avantageusement, un tel polynôme du second degré rend fidèlement compte des efforts induits dans le mécanisme de direction 4 par le soulèvement du véhicule lorsque l'on tourne les roues 7 en lacet.

Comme indiqué plus haut, la valeur de cette expression polynomiale est nulle lorsque la crémaillère 12 se trouve en position centrale, c'est-à-dire que les roues 7 sont orientées en ligne droite de telle sorte que $X_{CR}$ = 0, et que, par conséquent, aucun soulèvement du véhicule 2 n'a lieu.

De préférence, les coefficients kf1, kf2 du polynôme du second degré sont ajustés selon la vitesse longitudinale du véhicule V_vehic.

Ici encore, un tel ajustement permet d'affiner la précision et la fiabilité du modèle 15.

A titre illustratif, on a fourni, sur les figures 4, 5 et 6, quelques courbes d'hystérésis qui représentent, pour différentes valeurs de vitesse du véhicule V_vehic, la valeur de l'effort aux biellettes Fb en ordonnées, en fonction du déplacement de la crémaillère 12 en abscisses (c'est-à-dire en fonction de la position correspondante $X_{CR}$ de la jante de la roue 7).

La crémaillère était ici animée d'un cycle de va et vient, entraînant d'abord la roue 7 vers la droite, puis vers la gauche, et ainsi de suite.

Sur chaque graphique, la courbe lisse en trait mixte correspond au cycle modélisé, c'est-à-dire à la valeur d'effort aux biellettes Fb estimée selon le modèle 15, en situation de parking, véhicule à l'arrêt (V_vehic = 0).

La courbe lisse en trait pointillé correspond au cycle modélisé, c'est-à-dire à la valeur d'effort aux biellettes Fb estimée selon le modèle 15, en situation de roulage, à la vitesse indiquée (en l'espèce respectivement 3 km/h, 7 km/h et 15 km/h).

Les courbes bruitées correspondent à l'effort aux biellettes Fb mesuré, par exemple au moyen de jauges extensométriques, selon ces mêmes cycles de déplacement alterné de la crémaillère 12.

On remarque une très forte corrélation, quasiment une superposition, entre les courbes modélisées et les courbes mesurées, ce qui indique une grande fiabilité du modèle 15, et ce pour différentes valeurs de vitesse de véhicule V_vehic.

Ainsi, les résultats expérimentaux confirment que l'invention permet d'étendre le domaine de validité du modèle d'estimation d'effort aux biellettes depuis la situation de parking jusqu'à un large domaine de roulage à basse vitesse, s'étendant au moins jusqu'à 20 km/h, jusqu'à 30 km/h, ou même davantage.

En toute rigueur, sur les graphiques présentés aux figures 4, 5 et 6, on notera un léger décalage (offset) en ordonnée entre les valeurs d'effort Fb modélisées et les valeurs d'effort Fb mesurées.

Ce léger écart était dû à un simple défaut de symétrie du train de roues 7 testé. Il peut donc aisément être corrigé mécaniquement, en réglant convenablement le train de roues 7 (et le mécanisme de direction 4) pour en restaurer la symétrie par rapport à la position centrale d'origine.

Bien entendu, l'invention n'est nullement limitée aux seules variantes de réalisation susmentionnées, l'homme du métier étant notamment à même d'isoler ou de combiner librement entre elles l'une ou l'autre des caractéristiques décrites dans ce qui précède, ou de leur substituer un équivalent. Cependant, la portée de l'invention est définie par les revendications suivantes.

En particulier, l'invention concerne en tant que telle l'utilisation, pour l'estimation d'effort au sein d'un système de direction assistée, d'un modèle 15 incluant une composante de correction $F_2$ simulant le relâchement de l'effort de torsion en lacet du pneumatique 8 (progressivement avec la vitesse longitudinale V_vehic du véhicule) lorsque le véhicule 2 passe d'une situation de parking à une situation de roulage.

**Revendications**

1. Procédé d'estimation d'effort pour le contrôle d'un véhicule (2) estimant la valeur d'un effort d'actionnement, dit « effort aux biellettes » (Fb), qui s'exerce, dans un système de direction assistée (1) équipant le véhicule (2), sur un organe de transmission, tel qu'une biellette de direction (3), appartenant à un mécanisme de direction (4) qui relie un actionneur, tel qu'un volant de conduite (5) ou un moteur d'assistance (6), à une roue directrice (7) qui est orientable en lacet et qui porte un pneumatique (8) dont la bande de roulement (8BR) est en contact avec un sol (9), la valeur de l'effort aux biellettes estimé (Fb) étant corrigée en fonction de la vitesse longitudinale du véhicule (V_vehic) de manière à réduire, en valeur absolue, l'effort aux biellettes estimé (Fb), en fonction de la vitesse longitudinale du véhicule (V_vehic), lorsque le véhicule passe d'une situation de parking, dans laquelle la vitesse longitudinale du véhicule (V_vehic) est nulle, à une situation de roulage, dans laquelle la vitesse longitudinale du véhicule (V_vehic) est non nulle, ledit procédé étant **caractérisé en ce que** l'effort aux biellettes est évalué à partir d'un modèle (15) utilisant :

    - une première composante d'effort ($F_1$) qui est représentative d'une torsion élastique en lacet du pneumatique (8) correspondant à un écart de position ($\Delta X$) entre d'une part la position ($X_{CR}$) conférée à l'organe de transmission (3) par le système de direction assistée (1) et d'autre part la position ($X_{BR}$) de la bande de roulement (8BR) du pneumatique qui est retenue, à l'encontre des déplacements dudit organe de transmission, par un effort résistant de frottement (Frot, $k_c$) que le sol (9) exerce sur ladite bande de roulement du pneumatique (8BR),
    - et une seconde composante d'effort ($F_2$) qui atténue la première composante d'effort ($F_1$), en fonction de la vitesse longitudinale du véhicule (V_vehic), dès lors que le véhicule (2) adopte une vitesse longitudinale non nulle, de manière à prendre en considération le relâchement progressif de la torsion élastique en lacet du pneumatique (8) lors d'une transition entre une situation de parking, où la vitesse longitudinale du véhicule est nulle, et une situation de roulage, où la vitesse longitudinale du véhicule est non nulle.

2. Procédé selon la revendication 1, **caractérisé en ce que** la première composante d'effort ($F_1$) est modélisée au moyen d'un premier coefficient de raideur ($k_t$), représentatif de la raideur en torsion du pneumatique (8), que l'on multiplie par l'écart de position ($\Delta x$) entre l'organe de transmission (3) et la bande de roulement du pneumatique (8BR) : $F_1 = k_t * \Delta x$.

3. Procédé selon la revendication 1 ou 2, **caractérisé en ce que** la seconde composante d'effort ($F_2$) est modélisée au moyen d'un second coefficient ($k_d$) que l'on multiplie par la vitesse longitudinale (V_vehic) du véhicule et par l'écart de position ($\Delta x$) entre l'organe de transmission (3) et la bande de roulement du pneumatique (8BR) : $F_2 = k_d * V\_vehic * \Delta x$.

4. Procédé selon l'une des revendications 1 à 3, **caractérisé en ce que** la seconde composante d'effort ($F_2$) est calculée à partir de la vitesse longitudinale du véhicule (V_vehic) et à partir d'une valeur de frottement statique (Frot) qui est représentative de l'effort de frottement entre la bande de roulement (8BR) et le sol (9), en limite de glissement, qui doit être surmonté par l'action de l'organe de transmission (3) pour provoquer, lorsque le véhicule (2) est à l'arrêt, un déplacement en lacet de la bande de roulement (8BR) du pneumatique sur le sol (9).

5. Procédé selon les revendications 2, 3, et 4, **caractérisé en ce que** l'effort aux biellettes (Fb) est calculé à partir d'un terme du premier ordre par rapport à la vitesse du véhicule (V_vehic) et valant $\dfrac{Frot}{1 + \dfrac{k_d \cdot V\_vehic}{k_t}}$.

6. Procédé selon les revendications 3 et 4 ou la revendication 5, **caractérisé en ce que** le second coefficient ($k_d$) est ajusté en fonction de la valeur de frottement statique (Frot).

7. Procédé selon l'une des revendications 3, 5 ou 6, **caractérisé en ce que** le second coefficient ($k_d$) est ajusté en fonction de la vitesse longitudinale (V_vehic) du véhicule.

8. Procédé selon l'une des revendications 4 à 6, **caractérisé en ce que** la valeur de frottement statique (Frot) est ajustée selon des paramètres propres au véhicule ou à l'environnement dudit véhicule et qui sont susceptibles de modifier l'adhérence du pneumatique (8) sur le sol (9).

**9.** Procédé selon l'une des revendications 1 à 8, **caractérisé en ce que** le modèle (15) permettant d'évaluer l'effort aux biellettes (Fb) utilise en plus une troisième composante d'effort ($F_3$), qui dépend de la position ($X_{CR}$) de l'organe de transmission (3), afin de modéliser les effets du soulèvement du véhicule (2) lors du braquage en lacet de la roue (7).

**10.** Procédé selon la revendication 9, **caractérisé en ce que** la troisième composante d'effort ($F_3$) est calculée à partir d'un polynôme du second degré comprenant un terme linéaire et un terme quadratique par rapport à la position ($X_{CR}$) de l'organe de transmission (3) : $F_3 = kf1*X_{CR} + kf2*X_{CR}^2$.

**11.** Procédé selon la revendication 10, **caractérisé en ce que** les coefficients (kf1, kf2) du polynôme du second degré sont ajustés selon la vitesse longitudinale du véhicule (V_vehic).

**12.** Procédé selon l'une des revendications précédentes, **caractérisé en ce qu'**il est destiné à déterminer un effort d'actionnement dit « effort aux biellettes » (Fb) représentatif de l'effort qu'exerce un organe de transmission formé par une biellette de direction (3) sur une extrémité d'une crémaillère (12) qui est montée mobile par rapport au châssis (14) du véhicule, et que ladite biellette (3) relie à la roue directrice (7), à partir de la vitesse longitudinale du véhicule (V_vehic) et de la position de la crémaillère ($X_{CR}$) considérée comme position représentative de l'organe de transmission (3).

## Patentansprüche

**1.** Verfahren zur Schätzung einer Kraft für die Steuerung eines Fahrzeugs (2), bei dem der Wert einer Betätigungskraft, bezeichnet als "Spurstangenkraft" (Fb), geschätzt wird, die in einem Servorlenksystem (1), das das Fahrzeug (2) ausstattet, auf ein Übertragungsorgan wie eine Lenkungs-Spurstange (3) ausgeübt wird, die zu einem Lenkmechanismus (4) gehört, der einen Aktuator wie ein Lenkrad (5) oder einen Servomotor (6) mit einem lenkenden Rad (7) verbindet, das gier-ausrichtbar ist und das einen Reifen (8) trägt, dessen Lauffläche (8BR) mit einem Boden (9) im Kontakt ist, wobei der Wert der geschätzten Spurstangenkraft (Fb) in Abhängigkeit von der Längsgeschwindigkeit des Fahrzeugs (V_vehic) korrigiert wird, so dass die geschätzte Spurstangenkraft (Fb) in Abhängigkeit von der Längsgeschwindigkeit des Fahrzeugs (V_vehic) in Absolutwert reduziert wird, wenn das Fahrzeug aus einer Parksituation, in der die Längsgeschwindigkeit des Fahrzeugs (V_vehic) null ist, in eine Fahrtsituation wechselt, in der die Längsgeschwindigkeit des Fahrzeugs (V_vehic) nicht null ist, wobei das Verfahren **dadurch gekennzeichnet ist, dass** die Spurstangenkraft ausgehend von einem Modell (15) geschätzt wird, das verwendet:

- eine erste Kraftkomponente ($F_1$), die für eine elastische Gier-Torsion des Reifens (8) repräsentativ ist, die einer Positionsabweichung ($\Delta X$) zwischen einerseits der Position ($X_{CR}$), die dem Übertragungsorgan (3) vom Servorlenksystem (1) verliehen wird, und andererseits der Position ($X_{BR}$) der Lauffläche (8BR) des Reifens entspricht, die entgegen den Verlagerungen des Übertragungsorgans mittels einer Reibungswiderstandskraft (Frot, $k_c$), die der Boden (9) auf die Lauffläche des Reifens (8BR) ausübt, beibehalten wird,
- und eine zweite Kraftkomponente ($F_2$), die die erste Kraftkomponente ($F_1$) in Abhängigkeit von der Längsgeschwindigkeit des Fahrzeugs (V_vehic) abschwächt, sobald das Fahrzeug (2) eine Längsgeschwindigkeit von nicht null annimmt, derart, dass das schrittweise Nachlassen der elastischen Gier-Torsion des Reifens (8) bei einem Übergang zwischen einer Parksituation, in der die Längsgeschwindigkeit des Fahrzeugs null ist, und einer Fahrtsituation, in der die Längsgeschwindigkeit des Fahrzeugs nicht null ist, berücksichtigt wird.

**2.** Verfahren nach Anspruch 1, **dadurch gekennzeichnet, dass** die erste Kraftkomponente ($F_1$) mittels eines ersten Steifigkeitskoeffizienten (kt) modelliert wird, der für die Torsionssteifigkeit des Reifens (8) repräsentativ ist, der mit der Positionsabweichung ($\Delta x$) zwischen dem Übertragungsorgan (3) und der Lauffläche des Reifen (8BR) multipliziert wird: $F_1 = k_t*\Delta x$.

**3.** Verfahren nach Anspruch 1 oder 2, **dadurch gekennzeichnet, dass** die zweite Kraftkomponente ($F_2$) mittels eines zweiten Koeffizienten ($k_d$) modelliert wird, der mit der Längsgeschwindigkeit (V_vehic) des Fahrzeugs und mit der Positionsabweichung ($\Delta x$) zwischen dem Übertragungsorgan (3) und der Lauffläche des Reifens (8BR) multipliziert wird: $F_2 = k_d*V\_vehic*\Delta x$.

**4.** Verfahren nach einem der Ansprüche 1 bis 3, **dadurch gekennzeichnet, dass** die zweite Kraftkomponente ($F_2$) aus der Längsgeschwindigkeit des Fahrzeugs (V_vehic) und aus einem Wert für die statische Reibung (Frot) berechnet wird, der für die Reibungskraft zwischen der Lauffläche (8BR) und dem Boden (9) an der Schlupfgrenze repräsentativ ist, die durch die Wirkung des Übertragungsorgans (3) überwunden werden muss, um, wenn das Fahrzeug (2) steht, eine Gier-Verlagerung der Lauffläche (8BR) des Reifens auf dem Boden (9) zu bewirken.

5. Verfahren nach den Ansprüchen 2, 3 und 4, **dadurch gekennzeichnet, dass** die Spurstangenkraft (Fb) aus einem Term erster Ordnung im Verhältnis zur Geschwindigkeit des Fahrzeugs (V_vehic) berechnet wird und beträgt

$$\frac{Frot}{1+\frac{k_d \cdot V\_vehic \cdot}{k_t}}$$

6. Verfahren nach den Ansprüchen 3 und 4 oder Anspruch 5, **dadurch gekennzeichnet, dass** der zweite Koeffizient ($k_d$) in Abhängigkeit vom Wert für die statische Reibung (Frot) angepasst wird.

7. Verfahren nach einem der Ansprüche 3, 5 oder 6, **dadurch gekennzeichnet, dass** der zweite Koeffizient ($k_d$) in Abhängigkeit von der Längsgeschwindigkeit (V_vehic) des Fahrzeugs angepasst wird.

8. Verfahren nach einem der Ansprüche 4 bis 6, **dadurch gekennzeichnet, dass** der Wert für die statische Reibung (Frot) gemäß Parametern angepasst wird, die zum Fahrzeug oder zum Umfeld des Fahrzeugs gehören und die den Grip des Reifens (8) auf dem Boden (9) verändern können.

9. Verfahren nach einem der Ansprüche 1 bis 8, **dadurch gekennzeichnet, dass** das Modell (15), das gestattet, die Spurstangenkraft (Fb) zu bewerten, zusätzlich eine dritte Kraftkomponente ($F_3$) verwendet, die von der Position ($X_{CR}$) des Übertragungsorgans (3) abhängt, um die Wirkungen des Anhebens des Fahrzeugs (2) beim Gier-Einschlagen des Rades (7) zu modellieren.

10. Verfahren nach Anspruch 9, **dadurch gekennzeichnet, dass** die dritte Kraftkomponente ($F_3$) aus einem Polynom zweiter Ordnung berechnet wird, umfassend einen linearen Term und einen quadratischen Term im Verhältnis zur Position ($X_{CR}$) des Übertragungsorgans (3): $F_3 = kf1 \cdot X_{CR} + kf2 \cdot X_{CR}^2$.

11. Verfahren nach Anspruch 10, **dadurch gekennzeichnet, dass** die Koeffizienten (kf1, kf2) des Polynoms zweiter Ordnung gemäß der Längsgeschwindigkeit des Fahrzeugs (V_vehic) angepasst sind.

12. Verfahren nach einem der vorangehenden Ansprüche, **dadurch gekennzeichnet, dass** es zur Bestimmung einer Betätigungskraft, bezeichnet als "Spurstangenkraft" (Fb) bestimmt ist, die für die Kraft repräsentativ ist, die ein Übertragungsorgan, das von einer Lenkungs-Spurstange (3) gebildet ist, auf ein Ende einer Zahnstange (12) ausübt, die im Verhältnis zum Fahrgestell (14) des Fahrzeugs beweglich angebracht ist, und die die Spurstange (3) mit dem lenkenden Rad (7) verbindet, ausgehend von der Längsgeschwindigkeit des Fahrzeugs (V_vehic) und der Position der Zahnstange ($X_{CR}$), die als repräsentative Position des Übertragungsorgans (3) betrachtet wird.

**Claims**

1. A force estimation method for controlling a vehicle (2) estimating the value of an actuation force, called "link force" (Fb), which is exerted in a power steering system (1) fitted to the vehicle (2), on a transmission member, such as a steering link (3), belonging to a steering mechanism (4) which connects an actuator, such as a steering wheel (5) or an assistance motor (6), to a steered wheel (7) which can be steered in yaw and which carries a tire (8) whose tread (8BR) is in contact with a ground (9), the value of the estimated link force (Fb) being corrected as a function of the longitudinal speed (V_vehic) of the vehicle, so as to reduce, in absolute value, the estimated link force (Fb), as a function of the longitudinal speed (V_vehic) of the vehicle, when the vehicle passes from a parking situation, in which the longitudinal speed (V_vehic) of the vehicle is zero, to a driving situation, in which the longitudinal speed (V_vehic) of the vehicle is non-zero, said method being **characterized in that** the link force is evaluated from a model (15) using:

- a first force component ($F_1$) which is representative of a yaw elastic torsion of the tire (8) corresponding to a position difference ($\Delta X$) between on the one hand the position ($X_{CR}$) conferred on the transmission member (3) by the power steering system (1) and on the other hand the position ($X_{BR}$) of the tread (8BR) of the tire which is retained, against the displacements of said transmission member, by a friction resistant force (Frot, $k_c$) that the ground (9) exerts on said tread (8BR) of the tire,

- and a second force component ($F_2$) which attenuates the first force component ($F_1$), as a function of the longitudinal speed (V_vehic) of the vehicle, as soon as the vehicle (2) adopts a non-zero longitudinal speed, so as to take into consideration the progressive release of the yaw elastic torsion of the tire (8) during a transition between a parking situation, where the longitudinal speed of the vehicle is zero, and a driving situation, where the longitudinal speed of the vehicle is non-zero.

2. The method according to claim 1, **characterized in that** the first force component ($F_1$) is modeled by means of a first stiffness coefficient (kt), representative of the torsional stiffness of the tire (8), which is multiplied by the position difference ($\Delta$x) between the transmission member (3) and the tread (8BR) of the tire: $F_1 = k_t * \Delta x$.

3. The method according to claim 1 or 2, **characterized in that** the second force component ($F_2$) is modeled by means of a second coefficient ($k_d$) which is multiplied by the longitudinal speed (V_vehic) of the vehicle and by the position difference ($\Delta$x) between the transmission member (3) and the tread (8BR) of the tire: $F_2 = k_d * V\_vehic * \Delta x$.

4. The method according to any of claims 1 to 3, **characterized in that** the second force component ($F_2$) is calculated from the longitudinal speed (V_vehic) of the vehicle and from a static friction value (Frot) which is representative of the friction force between the tread (8BR) and the ground (9), at the sliding limit, which must be overcome by the action of the transmission member (3) to cause, when the vehicle (2) is stationary, a yaw displacement of the tread (8BR) of the tire on the ground (9).

5. The method according to claims 2, 3, and 4, **characterized in that** the link force (Fb) is calculated from a first-order term relative to the speed of the vehicle (V_vehic) and equal to

$$\frac{Frot}{1 + \dfrac{k_d \cdot V\_vehic}{k_t}}$$

6. The method according to claims 3 and 4 or claim 5, **characterized in that** the second coefficient ($k_d$) is adjusted as a function of the static friction value (Frot).

7. The method according to any of claims 3, 5 or 6, **characterized in that** the second coefficient ($k_d$) is adjusted as a function of the longitudinal speed (V_vehic) of the vehicle.

8. The method according to any of claims 4 to 6, **characterized in that** the static friction value (Frot) is adjusted according to parameters specific to the vehicle or to the environment of said vehicle and which are likely to modify the grip of the tire (8) on the ground (9).

9. The method according to any of claims 1 to 8, **characterized in that** the model (15) making it possible to evaluate the link force (Fb) also uses a third force component ($F_3$), which depends on the position ($X_{CR}$) of the transmission member (3), in order to model the effects of the lifting of the vehicle (2) during yaw turning of the wheel (7).

10. The method according to claim 9, **characterized in that** the third force component ($F_3$) is calculated from a second-degree polynomial comprising a linear term and a quadratic term relative to the position ($X_{CR}$) of the transmission member (3): $F_3 = kf1 * X_{CR} + kf2 * X_{CR}^2$.

11. The method according to claim 10, **characterized in that** the coefficients (kf1, kf2) of the second-degree polynomial are adjusted according to the longitudinal speed (V_vehic) of the vehicle.

12. The method according to any of the preceding claims **characterized in that** it is intended to determine an actuation force called "link force" (Fb) representative of the force exerted by a transmission member formed by a steering link (3) on one end of a rack (12) which is mounted movable relative to the chassis (14) of the vehicle, and **in that** said link (3) connects to the steering wheel (7), from the longitudinal speed (V_vehic) of the vehicle and the position ($X_{CR}$) of the rack considered as the representative position of the transmission member (3).

*Fig. 1*

$$F_b = -F1 - F3$$

*Fig. 2*

Fig. 3

Fig. 4

Fig. 5

Fig. 6

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2008189119 A

**Littérature non-brevet citée dans la description**

- **A. ZAREMBA et al.** Dynamic analysis and stability of a power assist steering system. *Proceedings of the 1995 american control conférence: the Westin Hotel, Seattle, Washington,* 21 Juin 1995, vol. 6